# EUROPEAN PATENT SPECIFICATION

(11) **EP 1 648 804 B1**
(45) Date of publication and mention of the grant of the patent: **17.12.2008**
(21) Application number: 03817807.5
(22) Date of filing: 02.10.2003
(51) Int. Cl.: B65G 67/60

(54) **APPARATUS FOR LOADING AND UNLOADING CARGO AT SEA-SIDE OF SHIP**
VORRICHTUNG ZUM LADEN UND ENTLADEN VON FRACHT AUF DER WASSERSEITE EINES SCHIFFS
DISPOSITIF DE CHARGEMENT ET DE DECHARGEMENT DE MARCHANDISES SUR LE COTE MARITIME D'UN BATEAU

(30) Priority: 29.07.2003 KR 2003052418
(43) Date of publication of application: 26.04.2006
(73) Proprietor: Han AH Engineering Co., Ltd., Seoul 135-010 (KR); Jeong, Gong-il, Gwacheon-si 427-806 (KR)
(72) Inventor: JEONG, Gong-il, Gyeonggi-do, Gwacheon-si 427-806 (KR)
(74) Representative: Wagner, Bernhard Peter
(86) International application number: PCT/KR2003/002030
(87) International publication number: WO 2005/012149

(56) References cited:
- JP-A- 6 247 562
- JP-A- 9 202 456
- JP-A- 2000 226 122
- US-A- 3 846 860
- PATENT ABSTRACTS OF JAPAN vol. 2000, no. 11, 3 January 2001 (2001-01-03) & JP 2000 226122 A (NKK CORP), 15 August 2000 (2000-08-15)

## Description

### Field of the Field

The present invention relates to an apparatus for loading or unloading cargo on or from a ship mooring at a quay wall of a harbor, and more particularly to an apparatus for loading and unloading cargo at a sea-side of a ship mooring at a quay wall, thereby enabling cargo to be loaded or unloaded simultaneously at both sides of the container ship by both cargo-handling apparatuses at the sea-side and the land-side.

### Background of the Invention

In general, marine transportation using a container ship is advantageous in that the marine transportation can carry more cargo and requires less cost in comparison with transportations by other transport means. Countries surrounded by the sea like the Republic of Korea have been considerably dependent on the marine transportation in a trade with foreign countries.

Particularly, the marine transportation industry is currently in pursuit of larger ships, in order to increase the quantity of cargo transported by each ship, thereby reducing physical distribution cost and securing economical efficiency. As a result, harbors are required to expand their facilities for mooring and cargo-handing.

However, most harbors have linear quay walls and cargo-handling equipment such as cranes located only on the land. Therefore, cargo-handling has no choice but to be performed only at one side of the a ship, that is, only at a quay-side or land-side of a ship mooring at the quay wall.

In this case, the cargo-handling capability is proportional to the capacity and number of cranes which take part in the cargo-handling. However, it has been very difficult to expand the cargo-handling capability in the conventional harbors, since there is a limit to the number of cranes which can be simultaneously operated at the same quay-wall in the conventional harbors, due to restriction to the space which can be occupied by combination of cargo-handling systems, movement lines of transport vehicles, etc.

Further, the time ,for which a ship stays at a quay wall is proportional to the size of the ship or the quantity of cargo carried by the ship. Therefore, larger ships deteriorate availability of a quay wall and increase the physical distribution cost.

In view of these needs an apparatus which can load or unload cargo at a sea-side of a ship mooring at a quay wall, thereby enabling cargo to be loaded or unloaded simultaneously at both sides of the container ship by both cargo-handling apparatuses at the sea-side and the land-side, has been suggested in JP 2000 26122 A.

### Objection of the Invention

It is an object of the present invention to provide an apparatus for loading and unloading cargo at a sea-side of a ship, which includes ballast tanks for rising and sinking a barge of the apparatus and cushioning chambers under the ballast tanks for effectively absorbing possible impact when the ballast tanks are settled on the seabed.

It is yet another object of the present invention to provide an apparatus for loading and unloading cargo at a sea-side of a ship, which has drawbridges each having length, inclination, and height, which can be freely adjusted according to the width of the container ship, the height of the quay wall, and the depth of the sea, so that the drawbridges can be rapidly installed and used regardless of the surroundings.

### Summary of the Invention

In order to accomplish these objects, there is provided an apparatus for loading and unloading cargo at a sea-side of a ship the apparatus comprising: a barge having a mooring side corresponding to one side of the ship; a barge anchoring unit for anchoring and releasing the barge at and from a predetermined place; at least one container crane disposed on an upper surface of the barge and being movable in a longitudinal direction of the barge; and at least one drawbridge for connecting an end of the mooring side of the barge to the quay wall. The barge anchoring unit also comprises a plurality of ballast tanks provided at a lower surface of the barge; and a pumping unit for filling and discharging seawater in and from the ballast tanks.

It is preferred that each of the ballast tanks has a cushioning chamber disposed under the ballast tank.

More preferably, the drawbridge comprises: a bridge deck connected between the quay wall and the barge, the bridge deck having a first end connected to the barge in such a manner that the bridge deck can pivot up and down about the first end of the bridge deck; a support tower installed on the barge; and a deck holder assembly having a first end coupled to a side surface of the bridge deck and a second end fixed to an upper portion of the support tower, so as to fold and unfold the bridge deck into and from the barge.

The deck holder assembly may comprise: a cylinder hinged to the upper portion of the support tower; and a piston having a first end connected to the cylinder and a second end hinged to the side surface of the bridge deck.

The drawbridge may further comprise a wire fixedly connecting the upper portion of the support tower to the barge.

Preferably, the bridge deck has a second end opposite to the first end of the bridge deck, and the drawbridge further comprises a plurality of roller bearings provided under the second end of the bridge deck, the roller bearings being in contact with the quay wall to connect the second end of the bridge deck to the quay wall when the drawbridge is unfolded.

The bridge deck may further comprise a strut installed at the second end of the bridge deck in contact with the quay wall.

More preferably, the apparatus may further comprise a tugboat for tugging the barge to a location at which the mooring side of the barge is disposed adjacent to the sea-side of the ship.

### Brief Description of the Drawings

The foregoing and other objects, features and advantages of the present invention will become more apparent from the following detailed description when taken in conjunction with the accompanying drawings in which:
FIG. 1 is a top view of an apparatus for loading and unloading cargo at a sea-side of a ship according to the present invention;
FIG. 2 is a sectional view of the apparatus shown in FIG. 1;
FIG. 3 is an enlarged partially-sectional view of a ballast tank shown in FIG. 2; and
FIG. 4 is a detailed side view the apparatus shown in FIG. 1, which especially shows a drawbridge of the apparatus in more detail.

### Detailed Description of the Preferred Embodiments

Reference will now be made in detail to the preferred embodiments of the present invention.

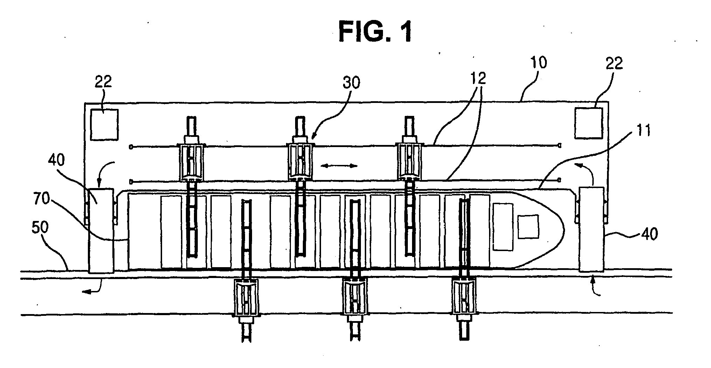

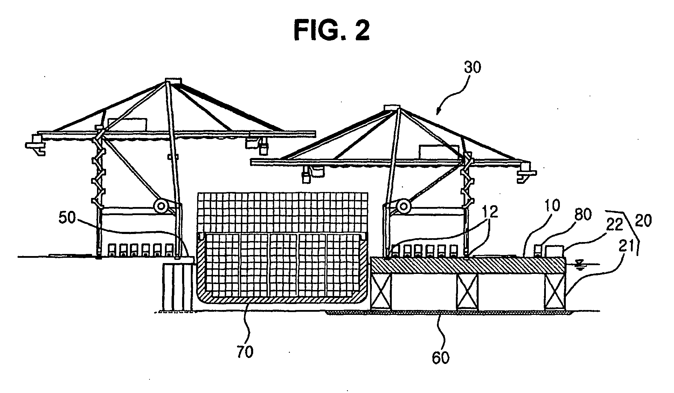

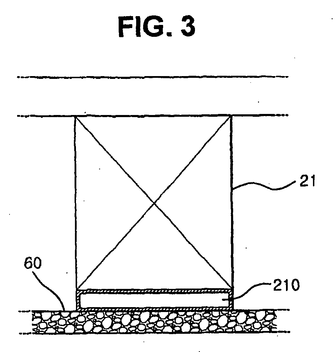

FIG. 1 is a top view of an apparatus for loading and unloading cargo at a sea-side of a ship according to the present invention, FIG. 2 is a sectional view of the apparatus shown in FIG. 1, and FIG. 3 is an enlarged partially-sectional view of a ballast tank shown in FIG. 2.

As shown in FIGs. 1 to 3, an apparatus for loading and unloading cargo at a sea-side of a ship according to the present invention includes a barge 10 having a mooring side 11 corresponding to one side of a container ship 70, a barge anchoring unit 20 for anchoring or releasing the barge 10 at or from a predetermined place, at least one container crane 30 disposed on an upper surface of the barge 10 and being movable in a longitudinal direction of the barge 10, and drawbridges 40 for connecting ends of the mooring side 11 of the barge 10 to the quay wall 50.

Here, the barge anchoring unit 20, which anchors or releases the barge 10 at or from a predetermined position in the sea, includes a plurality of ballast tanks 21 provided at a lower surface of the barge 10 and a pumping unit 22 for filling or discharging seawater in or from the ballast tanks 21.

Further, the container cranes 30 are installed on a pair of rails 12 extending in a longitudinal direction on the upper surface of the barge 10. The container cranes 30 load or unload cargo while moving in the longitudinal direction along the rails 12.

Hereinafter, operating of the apparatus according to the present invention will be described.

### 1. Mooring and anchoring the barge at one side of a ship

First, when a container ship 70 has been moored at a quay wall 50 in a harbor, a barge 10 is tugged by a tugboat (not shown) so that a mooring side 11 of the barge 10 is disposed adjacent to a sea-side of the container ship 70. Then, the pumping unit 22 is operated to fill the ballast tanks 21 with seawater. As the weight of the barge 10 increases, the ballast tanks 21 sink to the bottom of the sea. When the ballast tanks 21 have been seated on the bottom of the sea, the barge 10 is firmly anchored in place.

### 2. Loading and unloading cargo

When the barge 10 has been anchored in place in the manner described above, the drawbridge 40 mounted on the barge 10 is connected and firmly fixed to the quay wall 50. Then, cargo can be loaded or unloaded at both sides of the container ship 70 simultaneously by both the cranes installed on the quay wall 50 and the cranes arranged on the barge 10.

Then, a trailer 80 loading cargo thereon can be driven between the barge 10 and the quay wall 50 through the drawbridge 40 installed before the stem and after the stern of the container ship 70, to rapidly carry the cargo between them.

### 3. Separation after the cargo handling

When the cargo-handling has been completed, the drawbridge 40 is separated from the quay wall 50 and retracted into the barge 10. Then, the pumping unit 22 discharges seawater out of the ballast tanks 21, thereby causing the barge 10 to rise.

Then, the barge 10 is tugged and moved by tugboats to another container ship or mooring site, which requires cargo handling.

### 4. During idle time

During idle time, the barge 10 is moored at a quay wall or anchored at a predetermined location. When the weather is bad, for example, when it is windy, the ballast tanks 21 are filled with seawater and simultaneously the container cranes 30 are firmly fixed to the rails 12 of the barge 10, so that the barge 10 can be firmly held in place against wind.

As described above, an apparatus according to the present invention can load or unload cargo at a sea-side of a container ship mooring at a quay wall, thereby enabling cargo to be loaded or unloaded simultaneously at both sides, that is, sea-side and land-side, of the container ship, more rapidly than in the prior art.

Herein, as shown in FIGs. 2 and 3, a predetermined location of the seabed in front of the quay wall 50, to which the barge 10 is seated, may be subjected to a necessary processing and a flat rock-filled bed 60 may be then formed on the location, so that the ballast tanks 21 can be stably supported by the rock-filled bed 60 when the ballast tanks 21 have been seated in the location.

Further, as shown in FIG. 3, a cushioning chamber 210 may be formed under the ballast tanks 21, to effectively absorb impact which may be applied to the ballast tanks 21 when the ballast tanks 21 are settled on the seabed while the barge 10 is anchored.

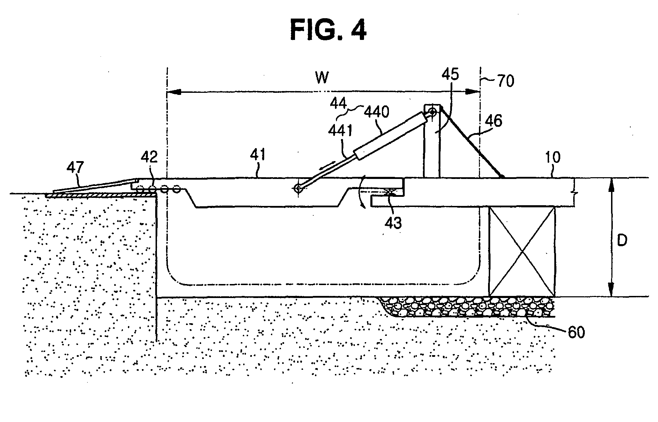

FIG. 4 is a detailed side view the apparatus shown in FIG. 1, which especially shows a drawbridge of the apparatus in more detail. As shown in FIG. 4, a bridge deck 41 of the drawbridge 40 is laid between the quay wall 50 and the barge 10, is fixed to the barge 10 through a coupling member 43, and is connected with a deck holder assembly 44. The deck holder assembly 44 is telescopically fixed to a support tower 45 installed on the barge 10 and thus has an adjustable length.

The coupling member 43 installed between the barge 10 and one end of the bridge deck 41 allows the bridge deck 41 to be pivoted up and down by the deck holder assembly 44. Herein, a typical coupling means such as a ball joint may be employed as the coupling member 43.

As a result, even when the quay wall 50 is not level with the barge 10 due to various reasons such as variances in the height of the quay wall 50 and the depth of the sea, the bridge deck 41 can be easily installed to connect the barge 10 and the quay wall 50 with each other.

Moreover, a plurality of roller bearings 42 disposed under the other end of the bridge deck 41 enable the bridge deck 41 to smoothly perform its original function regardless of change in the distance between the quay wall 50 and the barge 10 due to variance in the width of each container ship 70.

Here, the deck holder assembly 44 includes a cylinder 440 and a piston 441. The cylinder 440 is hinged to an upper portion of the support tower 45, and the piston 441 is connected to the cylinder and hinged to one side surface of the bridge deck 41. Therefore, the cylinder 440 and the piston 441 of the deck holder assembly 44 can fold and unfold the bridge deck 41 from and into the barge 10. When the bridge deck 41 is unfolded between the quay wall 50 and the barge 10, the bridge deck 41 is supported between the quay wall 50 and the barge 10.

When the cylinder 440 is operated, the bridge deck 41 is pivoted about the coupling member 43 to enable the height of the bridge deck 41 to be automatically adjusted.

The support tower 45 must be firmly fixed to the barge 10 so that the support tower 45 can support the weight of the bridge deck 41 while the cylinder 440 operates. To this end, a wire 46 having a strong tensile strength is connected between the upper portion of the support tower 45 and a portion of the barge located on the side opposite to the cylinder 440.

The bridge deck 41 has one end fixed to the barge 10 by the rotatable coupling member 43. The other end of the bridge deck 41 seated on the quay wall 50 is provided with a strut 47.

The strut 47 can prevent wheels of vehicles passing the bridge deck 41 from being caught by a stepped portion formed due to the thickness of the bridge deck 41, thereby allowing the vehicles to pass the bridge deck 41 more rapidly and smoothly.

### Industrial Applicability

As can be seen from the foregoing, an apparatus according to the present invention can load or unload cargo at a sea-side of a container ship mooring at a quay wall, thereby enabling cargo to be loaded or unloaded simultaneously at both sides of the container ship by both cargo-handling apparatuses at the sea-side and the land-side. As a result, the present invention can significantly improve cargo-handling capability of a harbor in comparison with that by the prior art.

Further, an apparatus according to the present invention can reduce the time for which a ship stays at a quay wall, thereby improving availability of the quay wall and decreasing the physical distribution cost.

Moreover, an apparatus according to the present invention may further have a cushioning chamber disposed under each ballast tank, which can effectively absorb possible impact and prevent breakage of the ballast tanks when the ballast tanks are settled on the seabed.

In addition, an apparatus according to the present invention has drawbridges each having length, inclination, and height, which can be freely adjusted according to the width of the container ship, the height of the quay wall, and the depth of the sea, so that the drawbridges can be rapidly installed and used regardless of the surroundings, thereby further reducing the time for which a ship stays at a quay wall.

While this invention has been described in connection with what is presently considered to be the most practical and preferred embodiment, it is to be understood that the invention is not limited to the disclosed embodiment and the drawings, but, on the contrary, it is intended to cover various modifications and variations within the scope of the appended claims.

## Claims

1. An apparatus for loading and unloading cargo at a sea-side of a ship (70), the apparatus comprising:
- a barge (10) having a mooring side (11) corresponding to one side of the ship (70);
- a barge anchoring unit (20) for anchoring and releasing the barge (10) at and from a predetermined place;
- at least one container crane (30) disposed on an upper surface of the barge (10) and being movable in a longitudinal direction of the barge (10); and
- at least one drawbridge (40) for connecting an end of the mooring side (11) of the barge (10) to the quay wall (50);
**characterized in that**
the barge anchoring unit (20) comprises:
- a plurality of ballast tanks (21) provided at a lower surface of the barge (10); and
- a pumping unit (22) for filling and discharging seawater in and from the ballast tanks (21).

2. The apparatus according to claim 1, wherein each of the ballast tanks (21) has a cushioning chamber (210) disposed under the ballast tank (21).

3. The apparatus according to claim 1, wherein the drawbridge (40) comprises:
- a bridge deck (41) connected between the quay wall (50) and the barge (10), the bridge deck (41) having a first end connected to the barge in such a manner that the bridge deck (41) can pivot up and down about the first end of the bridge deck (41);
- a support tower (45) installed on the barge (10); and
- a deck holder assembly (44) having a first end coupled to a side surface of the bridge deck (41) and a second end fixed to an upper portion of the support tower (45), so as to fold and unfold the bridge deck (41) into and from the barge (10).

4. The apparatus according to claim 3, wherein the deck holder assembly (44) comprises:
- a cylinder (440) hinged to the upper portion of the support tower (45); and
- a piston (441) having a first end connected to the cylinder (440) and a second end hinged to the side surface of the bridge deck (41).

5. The apparatus according to claim 3, wherein the drawbridge (40) further comprises a wire (46) fixedly connecting the upper portion of the support tower (45) to the barge (10).

6. The apparatus according to claim 3, wherein the bridge deck (41) has a second end opposite to the first end of the bridge deck (41), and the drawbridge (40) further comprises a plurality of roller bearings (42) provided under the second end of the bridge deck (41), the roller bearings (42) being in contact with the quay wall (50) to connect the second end of the bridge deck (41) to the quay wall (50) when the drawbridge (40) is unfolded.

7. The apparatus according to claim 3, wherein the bridge deck (41) further comprises a strut (47) installed at the second end of the bridge deck (41) in contact with the quay wall (50).

8. The apparatus according to claim 1, further comprising a tugboat for tugging the barge (10) to a location at which the mooring side (11) of the barge (10) is disposed adjacent to the sea-side of the ship (70).

## Patentansprüche

1. Vorrichtung zum Laden und Entladen von Fracht auf einer See-Seite eines Schiffs (70), wobei die Vorrichtung folgendes umfasst:
- eine Barge (10) mit einer Festmach-Seite (11), die einer Seite des Schiffs (70) entspricht;
- eine Bargenverankerungseinheit (20) zum Verankern und Freilassen der Barge (10) an und von einem vorbestimmten Ort;
- zumindest einen Container-Kran (30), der an einer oberen Fläche der Barge (10) angeordnet und in einer Längsrichtung der Barge (10) beweglich ist; und
- zumindest eine Zugbrücke (40) zum Verbinden eines Endes der Festmach-Seite (11) der Barge (10) mit der Kaiwand (50);
**dadurch gekennzeichnet, dass**
die Bargenverankerungseinheit (20) umfasst:
- eine Vielzahl von Balasttanks (21), die an einer unteren Fläche der Barge (10) vorgesehen sind; und
- eine Pumpeinheit (22) zum Füllen und Entleeren von Seewasser in die bzw. und aus den Balasttanks (21).

2. Vorrichtung nach Anspruch 1, wobei jeder Balasttank (21) eine Dämpfungskammer (210) aufweist, die unter dem Balasttank (21) angeordnet ist.

3. Vorrichtung nach Anspruch 1, wobei die Zugbrücke (40) folgendes umfasst:
- ein Brückendeck (41), das die Kaiwand (50) und die Barge (10) verbindet, wobei das Brückendeck (41) ein erstes Ende, das mit der Barge verbunden ist, in solch einer Weise aufweist, dass das Brückendeck (41) nach oben und nach unten um das erste Ende des Brückendecks (41) schwenken kann;
- einen Trageturm (45), der auf der Barge (10) eingebaut ist; und
- einen Deckhalteaufbau (44) mit einem ersten Ende, das mit einer Seitenfläche des Brückendecks (41) verbunden ist und mit einem zweiten Ende, das an einem oberen Abschnitt des Trageturms (45) befestigt ist, um das Brückendeck (41) in die bzw. aus der Barge (10) einzuklappen bzw. auszuklappen.

4. Vorrichtung nach Anspruch 3, wobei der Deckhalteaufbau (44) folgendes umfasst:
- einen Zylinder (440), der an dem oberen Abschnitt des Trageturms (45) drehbar angebracht ist; und
- einen Kolben (441) mit einem ersten Ende, das mit dem Zylinder (440) verbunden ist, und mit einem zweiten Ende, das an der Seitenfläche des Brückendecks (41) drehbar angebracht ist.

5. Vorrichtung nach Anspruch 3, wobei die Zugbrücke (40) ferner ein Drahtseil (46) umfasst, das den oberen Abschnitt des Trageturms (45) mit der Barge (10) fest verbindet.

6. Vorrichtung nach Anspruch 3, wobei das Brückendeck (41) ein dem ersten Ende des Brückendecks (41) gegenüberliegendes zweites Ende aufweist, und die Zugbrücke (40) ferner eine Vielzahl von Rollenlagern (42) umfasst, die unter dem zweiten Ende des Brückendecks (41) vorgesehen sind, wobei die Rollenlager (42) in Kontakt mit der Kaiwand (50) stehen, um das zweite Ende des Brückendecks (41) mit der Kaiwand (50) zu verbinden, wenn die Zugbrücke (40) ausgeklappt ist.

7. Vorrichtung nach Anspruch 3, wobei das Brückendeck (41) ferner eine Rampe (47) umfasst, die an dem zweiten Ende des Brückendecks (41) in Kontakt mit der Kaiwand (50) installiert ist.

8. Vorrichtung nach Anspruch 1, ferner mit einem Schlepper zum Schleppen der Barge (10) an einen Ort, an welchem die Festmach-Seite (11) der Barge (10) neben der See-Seite des Schiffs (70) angeordnet ist.

## Revendications

1. Appareil pour charger et décharger les marchandises sur le côté d'un bateau (70) tourné vers la mer, l'appareil comprenant :
- une barge (10) ayant un côté d'amarrage (11) correspondant à un côté du bateau (70) ;
- une unité d'ancrage de barge (20) pour ancrer et libérer la barge (10) à un emplacement prédéterminé et depuis celui-ci ;
- au moins une grue à containers (30) disposée sur une surface supérieure de la barge (10) et mobile dans une direction longitudinale de la barge (10) ; et
- au moins un pont mobile (40) pour connecter une extrémité du côté d'amarrage (11) de la barge (10) au mur du quai (50) ;
**caractérisé en ce que** l'unité d'ancrage de barge (20) comprend :
- une pluralité de réservoirs de ballasts (21) prévus à une surface inférieure de la barge (10) ; et
- une unité de pompage (22) pour remplir et évacuer de l'eau de mer vers et depuis les réservoirs de ballasts (21).

2. Appareil selon la revendication 1, dans lequel chacun des réservoirs de ballasts (21) comprend une chambre tampon (210) disposée au-dessous du réservoir de ballast (21).

3. Appareil selon la revendication 1, dans lequel le pont mobile (40) comprend :
- un pont supérieur (41) connecté entre le mur du quai (50) et la barge (10), le pont supérieur (41) ayant une première extrémité connectée à la barge d'une manière telle que le pont supérieur (41) peut pivoter vers le haut et vers le bas autour de la première extrémité du pont supérieur (41) ;
- une tour de support (45) installée sur la barge (10) ; et
- un ensemble porte-pont (44) ayant une première extrémité couplée à une surface latérale du pont supérieur (41) et une seconde extrémité fixée à une portion supérieure de la tour de support (45), de manière à plier et déplier le pont supérieur (41) en entrant dans la barge et en sortant de celle-ci (10).

4. Appareil selon la revendication 3, dans lequel l'ensemble porte-pont (44) comprend :
- un cylindre (440) articulé sur la portion supérieure de la tour de support (45) ; et
- un piston (441) ayant une première extrémité connectée au cylindre (440) et une seconde extrémité articulée sur la surface latérale du pont supérieur (41).

5. Appareil selon la revendication 3, dans lequel le pont mobile (40) comprend encore un câble (46) qui connecte de façon fixe la portion supérieure de la tour de support (45) à la barge (10).

6. Appareil selon la revendication 3, dans lequel le pont supérieur (41) a une seconde extrémité opposée à la première extrémité du pont supérieur (41), et le pont mobile (40) comprend encore une pluralité de paliers à roulements (42) prévus au-dessous de la seconde extrémité du pont supérieur (41), les paliers à roulement (42) étant en contact avec le mur du quai (50) pour connecter la seconde extrémité du pont supérieur (41) au mur du quai (50) quand le pont mobile (40) est déplié.

7. Appareil selon la revendication 3, dans lequel le pont supérieur (41) comprend encore une entretoise (47) installée à la seconde extrémité du pont supérieur (41) en contact avec le mur du quai (50).

8. Appareil selon la revendication 1, comprenant en outre un bateau remorqueur pour remorquer la barge (10) à un emplacement auquel le côté d'amarrage (11) de la barge (10) est disposé adjacent au côté du bateau (70) tourné vers la mer.
